# EUROPÄISCHE PATENTSCHRIFT

(11) **EP 2 803 246 B1**
(45) Veröffentlichungstag und Bekanntmachung des Hinweises auf die Patenterteilung: **03.05.2017**
(21) Anmeldenummer: 12768818.2
(22) Anmeldetag: 04.10.2012
(51) Int. Cl.: H05B 3/86

(54) **TRANSPARENTE SCHEIBE MIT ELEKTRISCH LEITFÄHIGER BESCHICHTUNG**
TRANSPARENT PANE WITH ELECTRICALLY HEATABLE COATING
VITRE TRANSPARENTE DOTÉE D'UN REVÊTEMENT POUVANT ÊTRE CHAUFFÉ DE MANIÈRE ÉLECTRIQUE

(30) Priorität: 10.01.2012 EP 12150547
(43) Veröffentlichungstag der Anmeldung: 19.11.2014
(73) Patentinhaber: Saint-Gobain Glass France, 92400 Courbevoie (FR)
(72) Erfinder: SCHMITZ, Christoph, 53332 Bornheim (DE); FISCHER, Klaus, 52477 Alsdorf (DE); JANZYK, Sebastian, 52134 Herzogenrath (DE); NEANDER, Marcus, 52249 Eschweiler (DE); BILLERT, Ulrich, F-78170 La Celle Saint-cloud (FR); LUXEMBOURG, David, 26750 Chatillon Saint-Jean (FR)
(74) Vertreter: Lendvai, Tomas
(86) Internationale Anmeldenummer: PCT/EP2012/069566
(87) Internationale Veröffentlichungsnummer: WO 2013/104438

(56) Entgegenhaltungen:
- WO-A1-92/04185
- WO-A1-2009/029466
- US-A- 4 902 580
- US-A1- 2005 202 254
- US-A1- 2008 210 303
- US-A1- 2008 277 320

## Beschreibung

Die Erfindung betrifft eine transparente Scheibe mit elektrisch leitfähiger Beschichtung, ein Verfahren zu deren Herstellung und deren Verwendung.

Das Sichtfeld einer Fahrzeugscheibe, insbesondere einer Windschutzscheibe muss frei von Eis und Beschlag gehalten werden. Bei Kraftfahrzeugen mit Verbrennungsmotor kann beispielsweise ein mittels Motorwärme erwärmter Luftstrom auf die Scheiben gelenkt werden.

Alternativ kann die Scheibe eine elektrische Heizfunktion aufweisen. Aus DE 103 52 464 A1 ist beispielsweise eine Verbundglasscheibe bekannt, bei der zwischen zwei Glasscheiben elektrisch beheizbare Drähte eingelegt sind. Die spezifische Heizleistung P, beispielsweise etwa 600 W/m², kann dabei durch den ohmschen Widerstand der Drähte eingestellt werden. Aufgrund von Design- und Sicherheitsaspekten muss die Anzahl sowie der Durchmesser der Drähte möglichst klein gehalten werden. Die Drähte dürfen bei Tageslicht und nachts bei Scheinwerferlicht visuell nicht oder kaum wahrnehmbar sein.

Es sind auch transparente, elektrisch leitfähige Beschichtungen insbesondere auf Silberbasis bekannt. Solche elektrisch leitfähigen Beschichtungen können als Beschichtungen mit reflektierenden Eigenschaften für den Infrarotbereich oder auch als beheizbare Beschichtungen verwendet werden. WO 03/024155 A2 offenbart beispielsweise eine elektrisch leitfähige Beschichtung mit zwei Silberlagen. Solche Beschichtungen weisen in der Regel Flächenwiderstände im Bereich von 3 Ohm/Quadrat bis 5 Ohm/Quadrat auf.

Die spezifische Heizleistung P einer elektrisch beheizbaren Beschichtung mit einem Flächenwiderstand R_{Quadrat}, einer Betriebsspannung U und einem Abstand h zwischen zwei Sammelleitern lässt sich mit der Formel P = U²/(R_{Quadrat}*h²) berechnen. Der Abstand h zwischen zwei Sammelleitern beträgt bei typischen Windschutzscheiben von Personenkraftwagen etwa 0,8 m, was ungefähr der Scheibenhöhe entspricht. Um bei einem Flächenwiderstand von 4 Ohm/Quadrat eine gewünschte spezifische Heizleistung P von 600 W/m² zu erzielen, ist eine Betriebsspannung U von etwa 40 V notwendig. Da die Bordspannung von Kraftfahrzeugen üblicherweise 14 V beträgt, ist ein Netzteil oder ein Spannungswandler notwendig, um eine Betriebsspannung von 40 V zu erzeugen. Eine Spannungserhöhung von 14 V auf 40 V ist immer mit elektrischen Leitungsverlusten und zusätzlichen Kosten für zusätzliche Bauelemente verbunden.

US 2007/0082219 A1 und US 2007/0020465 A1 offenbaren transparente, elektrisch leitfähige Beschichtungen mit mindestens drei Silberlagen. Für Beschichtungen auf Basis dreier Silberlagen sind in US 2007/0082219 A1 Flächenwiderstände um 1 Ohm/Quadrat angegeben. Für eine Betriebsspannung U = 14 V, einen Flächenwiderstand R_{Quadrat} = 1 Ohm/Quadrat und einen Abstand h = 0,8 m ergibt sich eine spezifische Heizleistung P von etwa 300 W/m².

Zur Bereitstellung einer ausreichenden spezifischen Heizleistung P, beispielsweise etwa 500 W/m², insbesondere zur Beheizung größerer Scheiben ist eine weitere Reduzierung des Flächenwiderstands der elektrisch beheizbaren Beschichtung erforderlich. Dies kann bei einer elektrisch beheizbaren Beschichtung mit typischerweise drei Silberlagen durch eine Erhöhung der Dicke der einzelnen Silberschichten erreicht werden. Eine zu große Schichtdicke der Silberschichten führt jedoch zu mangelhaften optischen Eigenschaften der Scheibe, insbesondere im Hinblick auf Transmission und Farbwirkung, so dass gesetzliche Vorschriften, wie sie beispielsweise in ECE R 43 ("Einheitliche Vorschriften für die Genehmigung des Sicherheitsglases und der Verbundglaswerkstoffe") festgelegt sind, nicht eingehalten werden können.

Der ausreichend geringe Flächenwiderstand kann auch durch die Verwendung von vier Silberlagen in der leitfähigen Beschichtung erreicht werden, wobei die optischen Eigenschaften der Scheibe infolge von geringen Schichtdicken der einzelnen Silberlagen den gesetzlichen Vorgaben entsprechen. Das Aufbringen von Beschichtungen mit vier oder mehr Silberschichten ist jedoch technisch aufwendig und kostenintensiv.

Die Aufgabe der vorliegenden Erfindung besteht darin, eine transparente Scheibe mit verbesserter elektrisch leitfähiger Beschichtung bereitzustellen. Die elektrisch leitfähige Beschichtung soll insbesondere einen im Vergleich zum Stand der Technik geringeren Flächenwiderstand R_{Quadrat} und damit eine verbesserte spezifische Heizleistung P sowie verbesserte reflektierende Eigenschaften für den Infrarotbereich aufweisen. Die Scheibe soll dabei eine hohe Transmission und eine hohe Farbneutralität aufweisen und kostengünstig herstellbar sein. US 2008/277320 A1 offenbart eine transparente Scheibe, umfassend ein transparentes Substrat und eine elektrisch leitfähige Beschichtung auf einer Oberfläche des transparenten Substrats, wobei die elektrisch leitfähige Beschichtung zwei übereinander angeordnete funktionelle Schichten aufweist und jede funktionelle Schicht eine Schicht optisch hochbrechenden Materials umfasst, die Gesamtschichtdicke aller elektrisch leitfähigen Schichten von 40 nm bis 75 nm beträgt und die elektrisch beheizbare Beschichtung einen Flächenwiderstand kleiner 1 Ohm/Quadrat aufweist. Die Aufgabe der vorliegenden Erfindung wird erfindungsgemäß durch eine transparente Scheibe mit elektrisch leitfähiger Beschichtung gemäß Anspruch 1 gelöst. Bevorzugte Ausführungen gehen aus den Unteransprüchen hervor.

Die erfindungsgemäße transparente Scheibe umfasst mindestens ein transparentes Substrat und mindestens eine elektrisch leitfähige Beschichtung auf mindestens einer Oberfläche des transparenten Substrats, wobei
- die elektrisch leitfähige Beschichtung mindestens zwei übereinander angeordnete funktionelle Schichten aufweist und jede funktionelle Schicht mindestens
   - eine Schicht optisch hochbrechenden Materials mit einem Brechungsindex größer oder gleich 2,1,
   - oberhalb der Schicht optisch hochbrechenden Materials eine Glättungsschicht, die zumindest ein nichtkristallines Oxid enthält,
   - oberhalb der Glättungsschicht eine erste Anpassungsschicht,
   - oberhalb der ersten Anpassungsschicht eine elektrisch leitfähige Schicht und
   - oberhalb der elektrisch leitfähigen Schicht eine zweite Anpassungsschicht umfasst,
- die Gesamtschichtdicke aller elektrisch leitfähigen Schichten von 40 nm bis 75 nm beträgt und
- die elektrisch leitfähige Beschichtung einen Flächenwiderstand kleiner 1 Ohm/Quadrat aufweist.

Ist eine erste Schicht oberhalb einer zweiten Schicht angeordnet, so bedeutet dies im Sinne der Erfindung, dass die erste Schicht weiter vom transparenten Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom transparenten Substrat entfernt angeordnet ist als die erste Schicht. Die oberste funktionelle Schicht ist diejenige funktionelle Schicht, die den größten Abstand zum transparenten Substrat aufweist. Die unterste funktionelle Schicht ist diejenige funktionelle Schicht, die den geringsten Abstand zum transparenten Substrat aufweist.

Eine Schicht im Sinne der Erfindung kann aus einem Material bestehen. Eine Schicht kann aber auch zwei oder mehrere Einzelschichten unterschiedlichen Materials umfassen. Eine erfindungsgemäße funktionelle Schicht umfasst beispielsweise zumindest eine Schicht optisch hochbrechenden Materials, eine Glättungsschicht, eine erste und eine zweite Anpassungsschicht und eine elektrisch leitfähige Schicht.

Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Die elektrisch leitfähige Beschichtung ist erfindungsgemäß zumindest auf einer Oberfläche des transparenten Substrats aufgebracht. Es können auch beide Oberflächen des transparenten Substrats mit einer erfindungsgemäßen elektrisch leitfähigen Beschichtung versehen sein.

Die elektrisch leitfähige Beschichtung kann sich über die gesamte Oberfläche des transparenten Substrats erstrecken. Die elektrisch leitfähige Beschichtung kann sich alternativ aber auch nur über einen Teil der Oberfläche des transparenten Substrats erstrecken. Die elektrisch leitfähige Beschichtung erstreckt sich bevorzugt über mindestens 50%, besonders bevorzugt über mindestens 70% und ganz besonders bevorzugt über mindestens 90% der Oberfläche des transparenten Substrats.

Die elektrisch leitfähige Beschichtung kann direkt auf der Oberfläche des transparenten Substrats aufgebracht sein. Die elektrisch leitfähige Beschichtung kann alternativ auf eine Trägerfolie aufgebracht sein, die mit dem transparenten Substrat verklebt ist.

Der besondere Vorteil der Erfindung ergibt sich insbesondere aus den Schichten optisch hochbrechenden Materials innerhalb jeder funktionellen Schicht. Mit optisch hochbrechendem Material wird im Sinne der Erfindung ein Material bezeichnet, dessen Brechungsindex größer oder gleich 2,1 beträgt. Nach dem Stand der Technik sind Schichtfolgen bekannt, bei denen die elektrisch leitfähigen Schichten zwischen jeweils zwei dielektrischen Schichten angeordnet sind. Diese dielektrischen Schichten enthalten üblicherweise Siliziumnitrid. Es hat sich überraschend gezeigt, dass die erfindungsgemäßen Schichten optisch hochbrechenden Materials zu einer Verringerung des Flächenwiderstands der elektrisch leitfähigen Beschichtung führt bei gleichzeitig guten optischen Eigenschaften der transparenten Scheibe, insbesondere hoher Transmission und neutraler Farbwirkung. Zusammen mit den erfindungsgemäßen Glättungsschichten lassen sich durch die Schichten optisch hochbrechenden Materials vorteilhaft geringe Werte für den Flächenwiderstand und damit hohe spezifische Heizleistungen erreichen. Insbesondere können Werte für den Flächenwiderstand erreicht werden, für die nach dem Stand der Technik große Schichtdicken der elektrisch leitfähigen Schichten erforderlich waren, welche die Transmission durch die Scheibe so stark verringern, dass die Erfordernisse an die Transmission von Fahrzeugscheiben nach ECE R 43 nicht erfüllt werden.

Die angegebenen Werte für Brechungsindizes sind bei einer Wellenlänge von 550 nm gemessen.

Die erfindungsgemäße transparente Scheibe mit elektrisch leitfähiger Beschichtung weist bevorzugt eine Gesamttransmission von größer 70 % auf. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Die elektrisch leitfähige Beschichtung weist erfindungsgemäß einen Flächenwiderstand von kleiner 1 Ohm/Quadrat auf. Der Flächenwiderstand der elektrisch leitfähigen Beschichtung beträgt bevorzugt von 0,4 Ohm/Quadrat bis 0,9 Ohm/Quadrat, besonders bevorzugt von 0,5 Ohm/Quadrat bis 0,8 Ohm/Quadrat, beispielsweise etwa 0,7 Ohm/Quadrat. In diesem Bereich für den Flächenwiderstand werden vorteilhaft hohe spezifische Heizleistungen P erreicht. Außerdem weist die elektrisch leitfähige Beschichtung in diesem Bereich für den Flächenwiderstand besonders gute reflektierende Eigenschaften für den Infrarotbereich auf.

Zur Erhöhung der Gesamttransmission und / oder zur Verringerung des Flächenwiderstands kann die transparente Scheibe mit elektrisch leitfähiger Beschichtung einer Temperaturbehandlung, beispielsweise bei einer Temperatur von 500 °C bis 700 °C, unterzogen werden.

Es hat sich gezeigt, dass die erfindungsgemäße elektrisch leitfähige Beschichtung einer solchen Temperaturbehandlung unterzogen werden kann, ohne dass die Beschichtung beschädigt wird. Die erfindungsgemäße transparente Scheibe kann zudem konvex oder konkav gebogen werden, ohne dass die Beschichtung beschädigt wird. Das sind große Vorteile der erfindungsgemäßen elektrisch leitfähigen Beschichtung.

In einer bevorzugten Ausführung der Erfindung weist die elektrisch leitfähige Beschichtung drei funktionelle Schichten auf. Eine technisch aufwendige und kostenintensive Herstellung einer elektrisch leitfähigen Beschichtung mit vier oder mehr elektrisch leitfähigen Schichten kann somit vermieden werden.

Die Schicht optisch hochbrechenden Materials weist bevorzugt einen Brechungsindex n von 2,1 bis 2,5 auf, besonders bevorzugt von 2,1 bis 2,3.

Die Schicht optisch hochbrechenden Materials enthält erfindungsgemäß zumindest ein Silizium-Metall-Mischnitrid, bevorzugt Silizium-Zirkonium-Mischnitrid. Das ist besonders vorteilhaft im Hinblick auf den Flächenwiderstand der elektrisch leitfähigen Beschichtung. Das Silizium-Zirkonium-Mischnitrid weist bevorzugt Dotierungen auf. Die Schicht optisch hochbrechenden Materials kann beispielsweise ein Aluminium-dotiertes Silizium-Zirkonium-Mischnitrid (SiZrNₓ:Al) enthalten.

Das Silizium-Zirkonium-Mischnitrid wird bevorzugt mittels magnetfeldunterstützter Kathodenzerstäubung mit einem Target abgeschieden, welches von 40 Gew. % bis 70 Gew. % Silizium, von 30 Gew. % bis 60 Gew. % Zirkonium und von 0 Gew. % bis 10 Gew. % Aluminium sowie herstellungsbedingte Beimengungen enthält. Das Target enthält besonders bevorzugt von 45 Gew. % bis 60 Gew. % Silizium, von 35 Gew. % bis 55 Gew. % Zirkonium und von 3 Gew. % bis 8 Gew. % Aluminium sowie herstellungsbedingte Beimengungen. Die Abscheidung des Silizium-Zirkonium-Mischnitrids erfolgt bevorzugt unter Zugabe von Stickstoff als Reaktionsgas während der Kathodenzerstäubung.

Die Schicht optisch hochbrechenden Materials kann aber auch beispielsweise zumindest Silizium-Aluminium-Mischnitrid, Silizium-Hafnium-Mischnitrid oder Silizium-Titan-Mischnitrid enthalten. Die Schicht optisch hochbrechenden Materials kann alternativ beispielsweise MnO, WO₃, Nb₂O₅, Bi₂O₃, TiO₂, Zr₃N₄ und / oder AIN enthalten.

Die Schichtdicke jeder Schicht optisch hochbrechenden Materials, die zwischen zwei elektrisch leitfähigen Schichten angeordnet ist, beträgt bevorzugt von 35 nm bis 70 nm, besonders bevorzugt von 45 nm bis 60 nm. In diesem Bereich für die Schichtdicke werden besonders vorteilhafte Flächenwiderstände der elektrisch leitfähigen Beschichtung und besonders gute optische Eigenschaften der transparenten Scheibe erreicht. Eine Schicht optisch hochbrechenden Materials ist im Sinne der Erfindung zwischen zwei elektrisch leitfähigen Schichten angeordnet, wenn zumindest eine elektrisch leitfähige Schicht oberhalb der Schicht optisch hochbrechenden Materials und wenn zumindest eine elektrisch leitfähige Schicht unterhalb der Schicht optisch hochbrechenden Materials angeordnet ist. Die Schicht optisch hochbrechenden Materials steht aber erfindungsgemäß nicht in direktem Kontakt zu den benachbarten elektrisch leitfähigen Schichten.

Die Schichtdicke der untersten Schicht optisch hochbrechenden Materials beträgt bevorzugt von 20 nm bis 40 nm. Damit werden besonders gute Ergebnisse erzielt.

In einer vorteilhaften Ausgestaltung der Erfindung ist oberhalb der obersten funktionellen Schicht eine Abdeckschicht angeordnet. Die Abdeckschicht schützt die darunter angeordneten Schichten vor Korrosion. Die Abdeckschicht ist bevorzugt dielektrisch. Die Abdeckschicht kann beispielsweise Siliziumnitrid und / oder Zinnoxid enthalten.

Die Abdeckschicht enthält bevorzugt zumindest ein optisch hochbrechendes Material mit einem Brechungsindex größer oder gleich 2,1. Die Abdeckschicht enthält besonders bevorzugt zumindest ein Silizium-Metall-Mischnitrid, insbesondere Silizium-Zirkonium-Mischnitrid, wie Aluminium-dotiertes Silizium-Zirkonium-Mischnitrid. Das ist besonders vorteilhaft im Hinblick auf die optischen Eigenschaften der erfindungsgemäßen transparenten Scheibe. Die Abdeckschicht kann aber auch andere Silizium-Metall-Mischnitride enthalten, beispielsweise Silizium-Aluminium-Mischnitrid, Silizium-Hafnium-Mischnitrid oder Silizium-Titan-Mischnitrid. Die Abdeckschicht kann alternativ auch beispielsweise MnO, WO₃, Nb₂O₅, Bi₂O₃, TiO₂, Zr₃N₄ und / oder AIN enthalten.

Die Schichtdicke der Abdeckschicht beträgt bevorzugt von 20 nm bis 40 nm. Damit werden besonders gute Ergebnisse erzielt.

Jede funktionelle Schicht der elektrisch leitfähigen Beschichtung umfasst erfindungsgemäß zumindest eine Glättungsschicht. Die Glättungsschicht ist unterhalb der ersten Anpassungsschicht angeordnet, bevorzugt zwischen der Schicht optisch hochbrechenden Materials und der ersten Anpassungsschicht. Die Glättungsschicht steht bevorzugt in direktem Kontakt zur ersten Anpassungsschicht. Die Glättungsschicht bewirkt eine Optimierung, insbesondere Glättung der Oberfläche für eine anschließend oberhalb aufgebrachte elektrisch leitfähige Schicht. Eine auf eine glattere Oberfläche abgeschiedene elektrisch leitfähige Schicht weist einen höheren Transmissionsgrad bei einem gleichzeitig niedrigeren Flächenwiderstand auf.

Die Glättungsschicht enthält erfindungsgemäß zumindest ein nichtkristallines Oxid. Das Oxid kann amorph oder teilamorph (und damit teilkristallin) sein, ist aber nicht vollständig kristallin. Die nichtkristalline Glättungsschicht weist eine geringe Rauheit auf und bildet somit eine vorteilhaft glatte Oberfläche für die oberhalb der Glättungsschicht aufzubringenden Schichten. Die nichtkristalline Glättungsschicht bewirkt weiter eine verbesserte Oberflächenstruktur der direkt oberhalb der Glättungsschicht abgeschiedenen Schicht, welche bevorzugt die erste Anpassungsschicht ist. Die Glättungsschicht kann beispielsweise zumindest ein Oxid eines oder mehrerer der Elemente Zinn, Silizium, Titan, Zirkonium, Hafnium, Zink, Gallium und Indium enthalten.

Die Glättungsschicht enthält bevorzugt ein nichtkristallines Mischoxid. Die Glättungsschicht enthält ganz besonders bevorzugt ein Zinn-Zink-Mischoxid. Das Mischoxid kann Dotierungen aufweisen. Die Glättungsschicht kann beispielsweise ein Antimon-dotiertes Zinn-Zink-Mischoxid (SnZnOₓ:Sb) enthalten. Das Mischoxid weist bevorzugt einen unterstöchiometrischen Sauerstoffgehalt auf. Ein Verfahren zur Herstellung von Zinn-Zink-Mischoxid-Schichten durch reaktive Kathodenzerstäubung ist beispielsweise aus DE 198 48 751 C1 bekannt. Das Zinn-Zink-Mischoxid wird bevorzugt mit einem Target abgeschieden, welches von 25 Gew. % bis 80 Gew. % Zink, von 20 Gew. % bis 75 Gew. % Zinn und von 0 Gew. % bis 10 Gew. % Antimon sowie herstellungsbedingte Beimengungen enthält. Das Target enthält besonders bevorzugt von 45 Gew. % bis 75 Gew. % Zink, von 25 Gew. % bis 55 Gew. % Zinn und von 1 Gew. % bis 5 Gew. % Antimon sowie herstellungsbedingte Beimengungen anderer Metalle. Die Abscheidung des Zinn-Zink-Mischoxids erfolgt unter Zugabe von Sauerstoff als Reaktionsgas während der Kathodenzerstäubung.

Die Schichtdicke einer Glättungsschicht beträgt bevorzugt von 3 nm bis 20 nm besonders bevorzugt von 4 nm bis 12 nm. Die Glättungsschicht weist bevorzugt einen Brechungsindex von kleiner als 2,2 auf.

Die elektrisch leitfähige Schicht enthält bevorzugt zumindest ein Metall, beispielsweise Gold oder Kupfer, oder eine Legierung, besonders bevorzugt Silber oder eine silberhaltige Legierung. Die elektrisch leitfähige Schicht kann aber auch andere, dem Fachmann bekannte elektrisch leitfähige Materialen enthalten.

In einer vorteilhaften Ausgestaltung der Erfindung enthält die elektrisch leitfähige Schicht mindestens 90 Gew. % Silber, bevorzugt mindestens 99,9 Gew. % Silber. Die elektrisch leitfähige Schicht wird bevorzugt mit gängigen Verfahren zur Schichtabscheidung von Metallen, beispielsweise durch Vakuumverfahren wie die magnetfeldunterstützte Kathodenzerstäubung aufgebracht.

Die elektrisch leitfähige Schicht weist bevorzugt eine Schichtdicke von 8 nm bis 25 nm, besonders bevorzugt von 10 nm bis 20 nm auf. Das ist besonders vorteilhaft im Hinblick auf die Transparenz und den Flächenwiderstand der elektrisch leitfähigen Schicht.

Die Gesamtschichtdicke aller elektrisch leitfähigen Schichten beträgt erfindungsgemäß von 40 nm bis 75 nm. In diesem Bereich für die Gesamtdicke aller elektrisch leitfähigen Schichten wird bei für Fahrzeugscheiben, insbesondere Windschutzscheiben typischen Abständen h zwischen zwei Sammelleitern und einer Betriebsspannung U im Bereich von 12 V bis 15 V vorteilhaft eine ausreichend hohe spezifische Heizleistung P und gleichzeitig eine ausreichend hohe Transmission erreicht. Zudem weist die elektrisch leitfähige Beschichtung in diesem Bereich für die Gesamtdicke aller elektrisch leitfähigen Schichten besonders gute reflektierende Eigenschaften für den Infrarotbereich auf. Zu geringere Gesamtschichtdicken aller elektrisch leitfähigen Schichten ergeben einen zu hohen Flächenwiderstand R_{Quadrat} und damit eine zu geringe spezifische Heizleistung P sowie verringerte reflektierende Eigenschaften für den Infrarotbereich. Zu große Gesamtschichtdicken aller elektrisch leitfähigen Schichten verringern die Transmission durch die Scheibe zu stark, so dass die Erfordernisse an die Transmission von Fahrzeugscheiben nach ECE R 43 nicht erfüllt werden. Es hat sich gezeigt, dass besonders gute Ergebnisse mit einer Gesamtschichtdicke aller elektrisch leitfähigen Schichten von 50 nm bis 60 nm, insbesondere von 51 nm bis 58 nm erzielt werden. Das ist besonders vorteilhaft im Hinblick auf den Flächenwiderstand der elektrisch leitfähigen Beschichtung und die Transmission der transparenten Scheibe.

Die erste Anpassungsschicht und / oder die zweite Anpassungsschicht enthält bevorzugt Zinkoxid ZnO_{1-δ} mit 0 ≤ δ ≤ 0,01, beispielsweise Aluminium-dotiertes Zinkoxid (ZnO:Al). Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Zinkoxid-Schicht wird bevorzugt durch magnetfeldunterstützte Kathodenzerstäubung abgeschieden. Das Target enthält bevorzugt von 85 Gew. % bis 100 Gew. % Zinkoxid und von 0 Gew. % bis 15 Gew. % Aluminium sowie herstellungsbedingte Beimengungen. Das Target enthält besonders bevorzugt von 90 Gew. % bis 95 Gew. % Zinkoxid und von 5 Gew. % bis 10 Gew. % Aluminium sowie herstellungsbedingte Beimengungen. Das Target enthält alternativ bevorzugt von 95 Gew.-% bis 99 Gew.-% Zink und von 1 Gew.-% bis 5 Gew.-% Aluminium, wobei die Abscheidung der Schichten unter Zugabe von Sauerstoff als Reaktionsgas erfolgt. Die Schichtdicken der ersten Anpassungsschicht und der zweiten Anpassungsschicht betragen bevorzugt von 3 nm bis 20 nm besonders bevorzugt von 4 nm bis 12 nm.

In einer vorteilhaften Ausgestaltung der erfindungsgemäßen transparenten Scheibe umfasst zumindest eine funktionelle Schicht zumindest eine Blockerschicht. Die Blockerschicht steht in direktem Kontakt zur elektrisch leitfähigen Schicht und ist unmittelbar oberhalb oder unmittelbar unterhalb der elektrisch leitfähigen Schicht angeordnet. Zwischen der elektrisch leitfähigen Schicht und der Blockerschicht ist also keine weitere Schicht angeordnet. Die funktionelle Schicht kann auch zwei Blockerschichten umfassen, wobei bevorzugt eine Blockerschicht unmittelbar oberhalb und eine Blockerschicht unmittelbar unterhalb der elektrisch leitfähigen Schicht angeordnet ist. Besonders bevorzugt umfasst jede funktionelle Schicht zumindest eine solche Blockerschicht. Die Blockerschicht enthält bevorzugt Niob, Titan, Nickel, Chrom und / oder Legierungen davon, besonders bevorzugt Nickel-Chrom-Legierungen. Die Schichtdicke der Blockerschicht beträgt bevorzugt von 0,1 nm bis 2 nm. Damit werden gute Ergebnisse erzielt. Eine Blockerschicht unmittelbar unterhalb der elektrisch leitfähigen Schicht dient insbesondere zur Stabilisierung der elektrisch leitfähigen Schicht während einer Temperaturbehandlung und verbessert die optische Qualität der elektrisch leitfähigen Beschichtung. Eine Blockerschicht unmittelbar oberhalb der elektrisch leitfähigen Schicht verhindert den Kontakt der empfindlichen elektrisch leitfähigen Schicht mit der oxidierenden reaktiven Atmosphäre während der Abscheidung der folgenden Schicht durch reaktive Kathodenzerstäubung, beispielsweise der zweiten Anpassungsschicht, welche bevorzugt Zinkoxid enthält.

Blockerschichten beispielsweise auf der Basis von Titan oder Nickel-Chrom-Legierungen sind nach dem Stand der Technik an sich bekannt. Typischerweise werden Blockerschichten mit einer Dicke von etwa 0,5 nm oder sogar einiger Nanometer verwendet. Es hat sich überraschend gezeigt, dass die erfindungsgemäße Ausgestaltung der elektrisch leitfähigen Beschichtung zu einer verminderten Anfälligkeit der Beschichtung für Defekte, die beispielsweise durch Korrosion oder Oberflächendefekte des transparenten Substrats hervorgerufen werden, führt. Daher können in der erfindungsgemäßen elektrisch leitfähigen Beschichtung Blockerschichten mit einer deutlich reduzierten Schichtdicke verwendet werden. Der besondere Vorteil von besonders dünnen Blockerschichten liegt in einer höheren Transmission und Farbneutralität der erfindungsgemäßen transparenten Scheibe mit elektrisch leitfähiger Beschichtung sowie in geringeren Herstellungskosten. Besonders gute Ergebnisse werden mit einer Schichtdicke der Blockerschichten von 0,1 nm bis 0,5 nm, bevorzugt von 0,1 nm bis 0,3 nm, insbesondere von 0,2 nm bis 0,3 nm erreicht.

Das transparente Substrat enthält bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Beispiele geeigneter Gläser sind aus DE 697 31 268 T2, Seite 8, Absatz [0053], bekannt.

Die Dicke des transparenten Substrats kann breit variieren und so hervorragend den Erfordernissen im Einzelfall angepasst werden. Vorzugsweise werden Scheiben mit den Standardstärken von 1,0 mm bis 25 mm und bevorzugt von 1,4 mm bis 2,6 mm verwendet. Die Größe des transparenten Substrats kann breit variieren und richtet sich nach der erfindungsgemäßen Verwendung. Das transparente Substrat weist beispielsweise im Fahrzeugbau und Architekturbereich übliche Flächen von 200 cm² bis zu 4 m² auf.

Das transparente Substrat kann eine beliebige dreidimensionale Form aufweisen. Vorzugsweise hat die dreidimensionale Form keine Schattenzonen, so dass sie beispielsweise durch Kathodenzerstäubung beschichtet werden kann. Das transparente Substrat ist bevorzugt plan oder leicht oder stark in einer Richtung oder in mehreren Richtungen des Raumes gebogen. Das transparente Substrat kann farblos oder gefärbt sein.

In einer vorteilhaften Ausgestaltung der Erfindung ist das transparente Substrat über zumindest eine thermoplastische Zwischenschicht mit einer zweiten Scheibe zu einer Verbundscheibe verbunden. Die erfindungsgemäße elektrisch leitfähige Beschichtung ist bevorzugt auf die der thermoplastischen Zwischenschicht zugewandten Oberfläche des transparenten Substrats aufgebracht. Dadurch wird die elektrisch leitfähige Beschichtung vorteilhaft vor Beschädigungen und Korrosion geschützt.

Die Verbundscheibe weist bevorzugt eine Gesamttransmission von größer 70 % auf.

Die thermoplastische Zwischenschicht enthält bevorzugt thermoplastische Kunststoffe, beispielsweise Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die zweite Scheibe enthält bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Die zweite Scheibe weist bevorzugt eine Dicke von 1,0 mm bis 25 mm und besonders bevorzugt von 1,4 mm bis 2,6 mm auf.

Die elektrisch leitfähige Beschichtung erstreckt sich bevorzugt über die gesamte Oberfläche des transparenten Substrats, abzüglich eines umlaufenden rahmenförmigen beschichtungsfreien Bereichs mit einer Breite von 2 mm bis 20 mm, bevorzugt von 5 mm bis 10 mm. Der beschichtungsfreie Bereich wird bevorzugt durch die thermoplastische Zwischenschicht oder einen Acrylatkleber als Dampfdiffusionssperre hermetisch versiegelt. Durch die Dampfdiffusionssperre wird die korrosionsempfindliche elektrisch leitfähige Beschichtung vor Feuchtigkeit und Luftsauerstoff geschützt. Ist die Verbundscheibe als Fahrzeugscheibe, beispielsweise als Windschutzscheibe vorgesehen und wird die elektrisch leitfähige Beschichtung als elektrisch beheizbare Beschichtung verwendet, so bewirkt der umlaufende beschichtungsfreie Bereich zudem eine elektrische Isolierung zwischen der spannungsführenden Beschichtung und der Fahrzeugkarosserie.

Das transparente Substrat kann in zumindest einem weiteren Bereich beschichtungsfrei sein, der beispielsweise als Datenübertragungsfenster oder Kommunikationsfenster dient. Die transparente Scheibe ist in dem weiteren beschichtungsfreien Bereich für elektromagnetische und insbesondere infrarote Strahlung durchlässig.

Die elektrisch leitfähige Beschichtung kann direkt auf der Oberfläche des transparenten Substrats aufgebracht sein. Alternativ kann die elektrisch leitfähige Beschichtung auf eine Trägerfolie aufgebracht sein, die zwischen zwei Zwischenschichten eingebettet ist. Die Trägerfolie enthält bevorzugt ein thermoplastisches Polymer, insbesondere Polyvinylbutyral (PVB), Ethylenvinylacetat (EVA), Polyurethan (PU), Polyethylenterephthalat (PET) oder Kombinationen davon.

Das transparente Substrat kann beispielsweise auch mit einer zweiten Scheibe über Abstandshalter zu einer Isolierverglasung verbunden sein. Das transparente Substrat kann auch mit mehr als einer weiteren Scheibe über thermoplastische Zwischenschichten und / oder Abstandshalter verbunden sein. Ist das transparente Substrat mit einer oder mit mehreren weiteren Scheiben verbunden, so kann eine oder mehrere dieser weiteren Scheiben ebenfalls eine elektrisch leitfähige Beschichtung aufweisen.

In einer bevorzugten Ausgestaltung ist die erfindungsgemäße elektrisch leitfähige Beschichtung eine elektrisch beheizbare Beschichtung. Die elektrisch leitfähige Beschichtung ist dabei geeignet elektrisch kontaktiert.

In einer weiteren bevorzugten Ausgestaltung ist die erfindungsgemäße elektrisch leitfähige Beschichtung eine Beschichtung mit reflektierenden Eigenschaften für den Infrarotbereich. Die elektrisch leitfähige Beschichtung muss dazu nicht elektrisch kontaktiert sein. Als Beschichtung mit reflektierenden Eigenschaften für den Infrarotbereich ist im Sinne der Erfindung insbesondere eine Beschichtung zu verstehen, welche einen Reflexionsgrad von mindestens 20 % im Wellenlängenbereich von 1000 nm bis 1600 nm aufweist. Bevorzugt weist die erfindungsgemäße elektrisch leitfähige Beschichtung einen Reflexionsgrad von größer oder gleich 50 % im Wellenlängenbereich von 1000 nm bis 1600 nm auf.

In einer vorteilhaften Ausgestaltung der Erfindung ist die elektrisch leitfähige Beschichtung über Sammelleiter mit einer Spannungsquelle verbunden und eine an die elektrisch leitfähige Beschichtung angelegte Spannung weist bevorzugt einen Wert von 12 V bis 15 V auf. Die Sammelleiter, sogenannte bus bars, dienen der Übertragung elektrischer Leistung. Beispiele geeigneter Sammelleiter sind aus DE 103 33 618 B3 und EP 0 025 755 B1 bekannt.

Die Sammelleiter werden vorteilhaft durch Aufdrucken einer leitfähigen Paste hergestellt. Wird das transparente Substrat nach Aufbringen der elektrisch leitfähigen Beschichtung gebogen, so wird die leitfähige Paste bevorzugt vor dem Biegen und / oder beim Biegen des transparenten Substrats eingebrannt. Die leitfähige Paste enthält bevorzugt Silber-Partikel und Glasfritten. Die Schichtdicke der eingebrannten leitfähigen Paste beträgt bevorzugt von 5 µm bis 20 µm.

In einer alternativen Ausgestaltung werden dünne und schmale Metallfolienstreifen oder Metalldrähte als Sammelleiter verwendet, die bevorzugt Kupfer und / oder Aluminium enthalten, insbesondere werden Kupferfolienstreifen mit einer Dicke von bevorzugt 10 µm bis 200 µm, beispielsweise etwa 50 µm verwendet. Die Breite der Kupferfolienstreifen beträgt bevorzugt 1 mm bis 10 mm. Der elektrische Kontakt zwischen elektrisch leitfähiger Beschichtung und Sammelleiter kann beispielsweise durch Auflöten oder Kleben mit einem elektrisch leitfähigen Kleber hergestellt werden. Ist das transparente Substrat Teil eines Verbundglases, so können die Metallfolienstreifen oder Metalldrähte beim Zusammenlegen der Verbundschichten auf die elektrisch leitfähige Beschichtung aufgelegt werden. Im späteren Autoklavprozess wird durch Einwirkung von Wärme und Druck ein sicherer elektrischer Kontakt zwischen den Sammelleitern und der Beschichtung erreicht.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Zwischenschicht eingebettet werden.

Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die Erfindung umfasst weiter ein Verfahren zur Herstellung einer erfindungsgemäßen transparenten Scheibe mit elektrisch leitfähiger Beschichtung, wobei mindestens zwei funktionelle Schichten nacheinander auf ein transparentes Substrat aufgebracht werden und zum Aufbringen jeder funktionellen Schicht nacheinander zumindest
(a) eine Schicht optisch hochbrechenden Materials mit einem Brechungsindex größer oder gleich 2,1,
(b) eine Glättungsschicht, die zumindest ein nichtkristallines Oxid enthält,
(c) eine erste Anpassungsschicht,
(d) eine elektrisch leitfähige Schicht und
(e) eine zweite Anpassungsschicht
aufgebracht werden.

In einer vorteilhaften Ausführung der Erfindung wird vor oder nach dem Aufbringen zumindest einer elektrisch leitfähigen Schicht eine Blockerschicht aufgebracht.

In einer vorteilhaften Ausführung der Erfindung wird nach dem Aufbringen der obersten funktionellen Schicht eine Abdeckschicht aufgebracht.

Die einzelnen Schichten werden durch an sich bekannte Verfahren, beispielsweise durch magnetfeldunterstützte Kathodenzerstäubung abgeschieden. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Die Schichtdicken der einzelnen Schichten mit den gewünschten Eigenschaften hinsichtlich Transmission, Flächenwiderstand und Farbwerten ergeben sich für den Fachmann in einfacher Weise durch Simulationen im Bereich der oben angegebenen Schichtdicken.

In einer vorteilhaften Ausführung der Erfindung wird das transparente Substrat und eine zweite Scheibe auf eine Temperatur von 500°C bis 700°C erhitzt und das transparente Substrat und die zweite Scheibe mit einer thermoplastischen Zwischenschicht flächendeckend verbunden. Das Erhitzen der Scheibe kann im Rahmen eines Biegeprozesses erfolgen. Die elektrisch leitfähige Beschichtung muss insbesondere geeignet sein, den Biegeprozess und / oder den Verbundprozess ohne Beschädigungen zu überstehen. Die Eigenschaften, insbesondere der Flächenwiderstand der oben beschriebenen elektrisch leitfähigen Beschichtung verbessern sich regelmäßig durch die Erhitzung.

Die elektrisch leitfähige Beschichtung kann vor dem Erhitzen des Substrats mit mindestens zwei Sammelleitern verbunden werden.

Die Erfindung umfasst weiter die Verwendung der erfindungsgemäßen transparenten Scheibe als Scheibe oder als Bestandteil einer Scheibe, insbesondere als Bestandteil einer Isolierverglasung oder einer Verbundscheibe, in Gebäuden oder in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und / oder Dachscheibe oder als Bestandteil einer Windschutzscheibe, Heckscheibe, Seitenscheibe und / oder Dachscheibe, insbesondere zur Beheizung einer Scheibe und / oder zur Verminderung der Aufheizung eines Innenraums. Die erfindungsgemäße Scheibe wird dabei insbesondere als Scheibe mit reflektierenden Eigenschaften für den Infrarotbereich und / oder als elektrisch beheizbare Scheibe verwendet.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen transparenten Scheibe mit elektrisch leitfähiger Beschichtung,
- Fig. 2: eine Draufsicht auf eine erfindungsgemäße transparente Scheibe als Teil einer Verbundscheibe,
- Fig. 3: einen Schnitt A-A' durch die Verbundscheibe gemäß Figur 2 und
- Fig. 4: ein detailliertes Flussdiagramm einer Ausführungsform des erfindungsgemäßen Verfahrens.

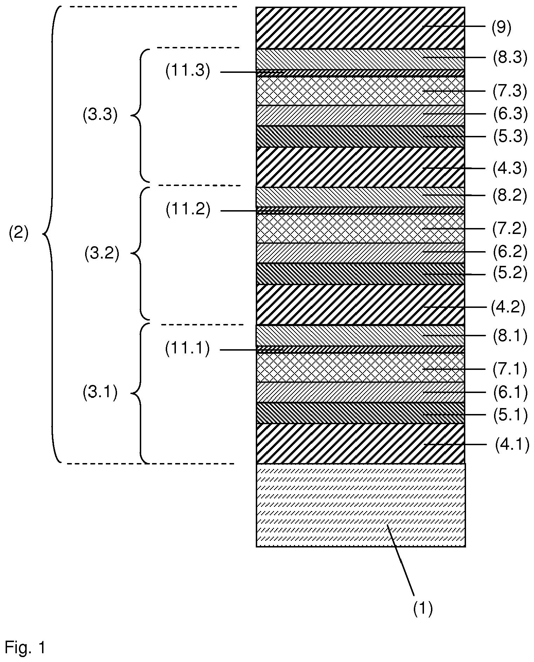

Fig. 1 zeigt einen Querschnitt durch eine Ausgestaltung der erfindungsgemäßen transparenten Scheibe mit elektrisch leitfähiger Beschichtung mit dem transparenten Substrat 1 und der elektrisch leitfähigen Beschichtung 2. Das Substrat 1 enthält Floatglas und weist eine Dicke von 2,1 mm auf. Die elektrisch leitfähige Beschichtung 2 umfasst drei funktionelle Schichten 3 (3.1, 3.2 und 3.3), die flächendeckend übereinander angeordnet sind. Jede funktionelle Schicht 3 umfasst
- eine Schicht optisch hochbrechenden Materials 4 (4.1, 4.2 und 4.3),
- eine Glättungsschicht 5 (5.1, 5.2 und 5.3),
- eine erste Anpassungsschicht 6 (6.1, 6.2 und 6.3)
- eine elektrisch leitfähige Schicht 7 (7.1, 7.2 und 7.3),
- eine Blockerschicht 11 (11.1, 11.2 und 11.3) und
- eine zweite Anpassungsschicht 8 (8.1, 8.2 und 8.3).

Die Schichten sind in der angegebenen Reihenfolge mit wachsendem Abstand zum transparenten Substrat 1 angeordnet. Oberhalb der obersten funktionellen Schicht 3.3 ist eine Abdeckschicht 9 angeordnet. Die genaue Schichtfolge mit geeigneten Materialien und beispielhaften Schichtdicken ist in Tabelle 1 dargestellt.

Die einzelnen Schichten der elektrisch leitfähigen Beschichtung 2 wurden durch Kathodenstrahlzerstäubung abgeschieden. Das Target zur Abscheidung der Anpassungsschichten 6, 8 enthielt 92 Gew. % Zinkoxid (ZnO) und 8 Gew. % Aluminium. Das Target zur Abscheidung der Glättungsschichten 5 enthielt 68 Gew. % Zinn, 30 Gew. % Zink und 2 Gew. % Antimon. Die Abscheidung erfolgte unter Zugabe von Sauerstoff als Reaktionsgas während der Kathodenzerstäubung. Das Target zur Abscheidung der Schichten optisch hochbrechenden Materials 4 sowie der Abdeckschicht 9 enthielt 52,9 Gew. % Silizium, 43,8 Gew. % Zirkonium und 3,3 Gew. % Aluminium. Die Abscheidung erfolgte unter Zugabe von Stickstoff als Reaktionsgas während der Kathodenzerstäubung.

Durch die erfindungsgemäße Ausgestaltung der elektrisch leitfähigen Beschichtung 2 mit den Schichten optisch hochbrechenden Materials 4 und den Glättungsschichten 5 wird vorteilhaft ein im Vergleich zum Stand der Technik verringerter Flächenwiderstand und damit verbesserte Reflexionseigenschaften für den Infrarotbereich und eine verbesserte spezifische Heizleistung erreicht. Die optischen Eigenschaften der erfindungsgemäßen transparenten Scheibe mit elektrisch leitfähiger Beschichtung genügen dabei den gesetzlichen Anforderungen an Verglasungen im Fahrzeugbau.

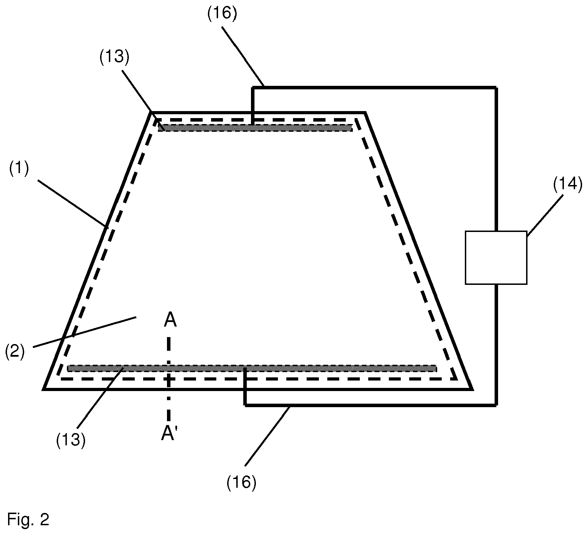

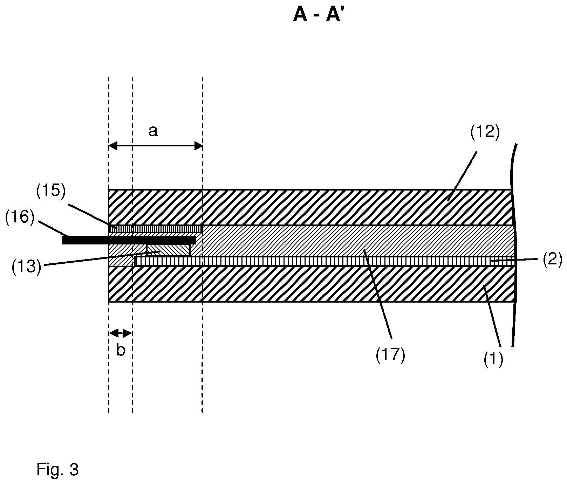

Fig. 2 und Fig. 3 zeigen je ein Detail einer erfindungsgemäßen transparenten Scheibe mit elektrisch leitfähiger Beschichtung als Teil einer Verbundscheibe. Die Verbundscheibe ist als Windschutzscheibe eines Personenkraftwagens vorgesehen. Das transparente Substrat 1 ist über eine thermoplastische Zwischenschicht 17 mit einer zweiten Scheibe 12 verbunden. Figur 2 zeigt eine Draufsicht auf die von der thermoplastischen Zwischenschicht abgewandte Oberfläche des transparenten Substrats 1. Das transparente Substrat 1 ist die dem Innenraum des Personenkraftwagens zugewandte Scheibe. Das transparente Substrat 1 und die zweite Scheibe 12 enthalten Floatglas und weisen eine Dicke von jeweils 2,1 mm auf. Die thermoplastische Zwischenschicht 17 enthält Polyvinylbutyral (PVB) und weist eine Dicke von 0,76 mm auf.

Auf die zur thermoplastischen Zwischenschicht 17 hingewandte Oberfläche des transparenten Substrats 1 ist eine elektrisch leitfähige Beschichtung 2 aufgebracht. Die elektrisch leitfähige Beschichtung 2 ist eine elektrisch beheizbare Beschichtung und ist dazu elektrisch kontaktiert. Die elektrisch leitfähige Beschichtung 2 erstreckt sich über die gesamte Oberfläche des transparenten Substrats 1 abzüglich eines umlaufenden rahmenförmigen beschichtungsfreien Bereichs mit einer Breite b von 8 mm. Der beschichtungsfreie Bereich dient der elektrischen Isolierung zwischen der spannungsführenden elektrisch leitfähigen Beschichtung 2 und der Fahrzeugkarosserie. Der beschichtungsfreie Bereich ist durch Verkleben mit der Zwischenschicht 17 hermetisch versiegelt, um die elektrisch leitfähige Beschichtung 2 vor Beschädigungen und Korrosion zu schützen.

Am äußeren oberen und unteren Rand des transparenten Substrats 1 ist zur elektrischen Kontaktierung der elektrisch leitfähigen Beschichtung 2 jeweils ein Sammelleiter 13 angeordnet. Die Sammelleiter 13 wurden mittels einer leitfähigen Silberpaste auf die elektrisch leitfähige Beschichtung 2 aufgedruckt und eingebrannt. Die Schichtdicke der eingebrannten Silber-Paste beträgt 15 µm. Die Sammelleiter 13 sind elektrisch leitend mit den darunterliegenden Bereichen der elektrisch leitfähigen Beschichtung 2 verbunden.

Die Zuleitungen 16 bestehen aus verzinnten Kupferfolien mit einer Breite von 10 mm und einer Dicke von 0,3 mm. Jede Zuleitung 16 ist jeweils mit einem der Sammelleiter 13 verlötet. Die elektrisch leitfähige Beschichtung 2 ist über die Sammelleiter 13 und die Zuleitungen 16 mit einer Spannungsquelle 14 verbunden. Die Spannungsquelle 14 ist die Bordspannung von 14 V eines Kraftfahrzeugs.

Auf der zweiten Scheibe 12 ist am Rand der zur thermoplastischen Zwischenschicht 17 hingewandten Oberfläche eine opake Farbschicht mit einer Breite a von 20 mm als Abdeckdruck 15 rahmenförmig aufgebracht. Der Abdeckdruck 15 verdeckt die Sicht auf den Klebestrang, mit dem die Verbundscheibe in die Fahrzeugkarosserie eingeklebt wird. Der Abdeckdruck 15 dient gleichzeitig als Schutz des Klebers vor UV-Strahlung und damit als Schutz vor vorzeitiger Alterung des Klebers. Des Weiteren werden die Sammelleiter 13 und die Zuleitungen 16 durch den Abdeckdruck 15 verdeckt.

Fig. 3 zeigt einen Schnitt entlang A-A' durch die Verbundscheibe gemäß Figur 2 im Bereich der unteren Kante. Zu sehen ist das transparente Substrat 1 mit der elektrisch leitfähige Beschichtung 2, die zweite Scheibe 12, die thermoplastische Zwischenschicht 17, ein Sammelleiter 13, eine Zuleitung 16 sowie der Abdeckdruck 15.

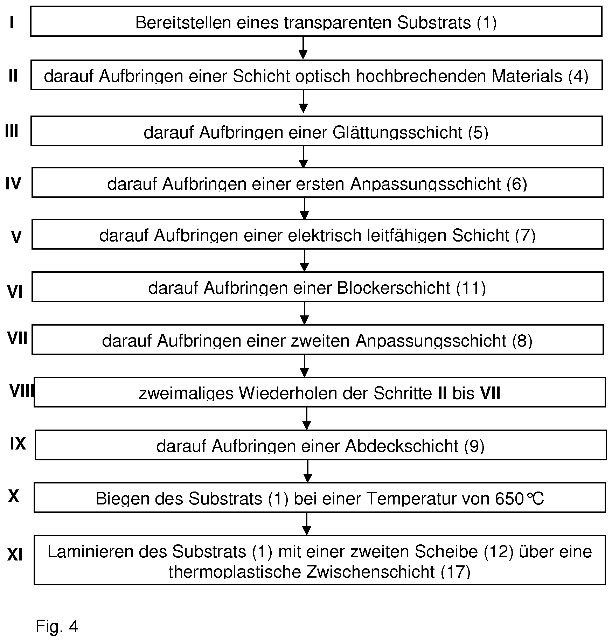

Fig. 4 zeigt ein Flussdiagramm eines Ausführungsbeispiels des erfindungsgemäßen Verfahrens zur Herstellung einer transparenten Scheibe mit elektrisch leitfähiger Beschichtung 2.

### Beispiele

Es wurde eine erfindungsgemäße transparente Scheibe mit elektrisch leitfähiger Beschichtung hergestellt. Die Schichtfolge und die Schichtdicken für die erfindungsgemäßen Beispiele 1 und 2 sind in Tabelle 1 dargestellt. Nach der Beschichtung des transparenten Substrats 1 wurde der Flächenwiderstand der elektrisch leitfähigen Beschichtung 2 bestimmt. Das mit der elektrisch leitfähigen Beschichtung 2 versehene transparente Substrat 1 wurde anschließend bei einer Temperatur von etwa 650° C gebogen. Der Biegeprozess dauerte etwa 10 min. Anschließend wurde das transparente Substrat 1 mit einer ebenfalls gebogenen zweiten Scheibe 12 mit einer Dicke von 2,1 mm über eine thermoplastische Zwischenschicht 17 bei einer Temperatur von etwa 140°C und einem Druck von etwa 12 bar laminiert. Die thermoplastische Zwischenschicht enthielt Polyvinylbutyral (PVB) und wies eine Dicke von 0,76 mm auf. Die elektrisch leitfähige Beschichtung 2 war dabei zur thermoplastischen Zwischenschicht 17 hingewandt angeordnet.

Die gemessenen Werte für den Flächenwiderstand R_{Quadrat} vor und nach der Temperaturbehandlung sind in Tabelle 3 zusammengefasst.

**Tabelle 1**

| Material | Bezugszeichen | | Schichtdicke | |
|---|---|---|---|---|
| | | | Beispiel 1 | Beispiel 2 |
| SiZrNₓ:Al | 9 | | 40 nm | 40 nm |
| ZnO:Al | 8.3 | 3.3 | 10 nm | 10 nm |
| NiCr | 11.3 | | 0,1 nm | 0,1 nm |
| Ag | 7.3 | | 16 nm | 18 nm |
| ZnO:Al | 6.3 | | 10 nm | 10 nm |
| SnZnOₓ:Sb | 5.3 | | 6 nm | 6 nm |
| SiZrNₓ:Al | 4.3 | | 59 nm | 60 nm |
| ZnO:Al | 8.2 | 3.2 | 10 nm | 10 nm |
| NiCr | 11.2 | | 0,1 nm | 0,1 nm |
| Ag | 7.2 | | 16 nm | 18 nm |
| ZnO:Al | 6.2 | | 10 nm | 10 nm |
| SnZnOₓ:Sb | 5.2 | | 6 nm | 6 nm |
| SiZrNₓ:Al | 4.2 | | 63 nm | 59 nm |
| ZnO:Al | 8.1 | 3.1 | 5 nm | 5 nm |
| NiCr | 11.1 | | 0,1 nm | 0,1 nm |
| Ag | 7.1 | | 15 nm | 18 nm |
| ZnO:Al | 6.1 | | 10 nm | 10 nm |
| SnZnOₓ:Sb | 5.1 | | 6 nm | 6 nm |
| SiZrNₓ:Al | 4.1 | | 28 nm | 28 nm |
| Glas | 1 | | 2,1 mm | 2,1 mm |

### Vergleichsbeispiele

Die Vergleichsbeispiele wurden genauso durchgeführt wie die Beispiele. Der Unterschied lag in der elektrisch leitfähigen Beschichtung 2. Im Gegensatz zu den Beispielen waren zwischen jeweils zwei elektrisch leitfähigen Silberschichten keine Schichten optisch hochbrechenden Materials im Sinne der Erfindung angeordnet, sondern dielektrische Schichten enthaltend Siliziumnitrid. Solche Schichten enthaltend Siliziumnitrid sind nach dem Stand der Technik zur Trennung von elektrisch leitfähigen Schichten bekannt. Im Vergleichsbeispiel 1 umfasste die elektrisch leitfähige Beschichtung des Weiteren im Gegensatz zum erfindungsgemäßen Beispiel nur eine Glättungsschicht enthaltend Antimon-dotiertes Zinn-Zink-Oxid, welche unterhalb der untersten Silberschicht angeordnet war. Im Vergleichsbeispiel 2 umfasste die elektrisch leitfähige Beschichtung wie im erfindungsgemäßen Beispiel insgesamt drei Glättungsschicht enthaltend Antimon-dotiertes Zinn-Zink-Oxid, wobei jede Glättungsschicht unterhalb jeweils einer elektrisch leitfähigen Silberschicht angeordnet war. Die Schichtdicken der elektrisch leitfähigen Schichten, welche Silber enthielten, wurden in den Vergleichsbeispielen genau so gewählt wie in dem erfindungsgemäßen Beispiel 1. Die genaue Schichtenfolge mit Schichtdicken und Materialen der Vergleichsbeispiele sind in Tabelle 2 dargestellt.

Die gemessenen Werte für den Flächenwiderstand R_{Quadrat} vor und nach der Temperaturbehandlung sind in Tabelle 3 zusammengefasst.

**Tabelle 2**

| Material | Schichtdicke | |
|---|---|---|
| | Vergleichsbeispiel 1 | Vergleichsbeispiel 2 |
| SiZrNₓ:Al | 40 nm | 40 nm |
| ZnO:Al | 10 nm | 10 nm |
| NiCr | 0,1 nm | 0,1 nm |
| Ag | 16 nm | 16 nm |
| ZnO:Al | 10 nm | 10 nm |
| SnZnOₓ:Sb | (keine) | 6 nm |
| Si₃N₄ | 65 nm | 65 nm |
| ZnO:Al | 10 nm | 10 nm |
| NiCr | 0,1 nm | 0,1 nm |
| Ag | 16 nm | 16 nm |
| ZnO:Al | 10 nm | 10 nm |
| SnZnOₓ:Sb | (keine) | 6 nm |
| Si₃N₄ | 69 nm | 69 nm |
| ZnO:Al | 5 nm | 5 nm |
| NiCr | 0,1 nm | 0,1 nm |
| Ag | 15 nm | 15 nm |
| ZnO:Al | 10 nm | 10 nm |
| SnZnOₓ:Sb | 6 nm | 6 nm |
| SiZrNₓ:Al | 28 nm | 28 nm |
| Glas | 2,1 mm | 2,1 mm |

**Tabelle 3**

| | R_{Quadrat} [Ohm/Quadrat] vor Temperaturbehandlung | R_{Quadrat} [Ohm/Quadrat] nach Temperaturbehandlung und Lamination |
|---|---|---|
| Beispiel 1 | 1,06 | 0,83 |
| Beispiel 2 | 0,84 | 0,66 |
| Vergleichsbeispiel 1 | 1,26 | 1,03 |
| Vergleichsbeispiel 2 | 1,12 | 0,88 |

Aufgrund der gleichen Dicken der elektrisch leitfähigen Schichten verdeutlicht der Vergleich zwischen dem erfindungsgemäßen Beispiel 1 und den Vergleichsbeispielen die Auswirkung der erfindungsgemäßen Gestaltung der elektrisch leitfähigen Beschichtung 2 mit den Schichten optisch hochbrechenden Materials 4 auf den Flächenwiderstand. Die erfindungsgemäße elektrisch leitfähige Beschichtung 2 in Beispiel 1 wies überraschend bereits vor der Temperaturbehandlung einen gegenüber dem Vergleichbeispiel 1 um 16 % verringerten Flächenwiderstand R_{Quadrat} auf. Die Temperaturbehandlung führte zu einer weiteren Verringerung des Flächenwiderstand R_{Quadrat}. Nach Temperaturbehandlung und Lamination war der Flächenwiderstand R_{Quadrat} der elektrisch leitfähigen Beschichtung 2 im erfindungsgemäßen Beispiel gegenüber dem Vergleichsbeispiel 1 um 19 % erniedrigt.

Die Erniedrigung des Flächenwiderstands R_{Quadrat} der elektrisch leitfähigen Beschichtung 2 im erfindungsgemäßen Beispiel 1 gegenüber dem Vergleichsbeispiel 1 ist nicht ausschließlich auf die Anwesenheit der zusätzlichen Glättungsschichten 5.2 und 5.3 zurückzuführen, wie aus Vergleichsbeispiel 2 deutlich wird. Die zusätzlichen Glättungsschichten im Vergleichsbeispiel 2 führen zwar zu einer Verringerung des Flächenwiderstands R_{Quadrat} gegenüber dem Vergleichsbeispiel 1 um 13 % vor der Temperaturbehandlung und um 15 % nach der Temperaturbehandlung. Der besonders niedrige Flächenwiderstand des Beispiels 1 mit den erfindungsgemäßen Schichten optisch hochbrechenden Materials 4.2 und 4.3 wird aber im Vergleichsbeispiel 2 nicht erreicht. Im erfindungsgemäßen Beispiel 1 ist der Flächenwiderstand R_{Quadrat} gegenüber dem Vergleichsbeispiel 2 um 5 % vor der Temperaturbehandlung und um 6 % nach der Temperaturbehandlung verringert.

Das erfindungsgemäße Beispiel 2 wies die gleiche Schichtenfolge auf wie das Beispiel 1. Die Schichtdicken waren jedoch anders gewählt als im Beispiel 1. Insbesondere wies die elektrisch leitfähige Beschichtung 2 im Beispiel 2 dickere elektrisch leitfähige Schichten 7 auf. Dadurch konnte der Flächenwiderstand der elektrisch leitfähigen Beschichtung 2 weiter reduziert werden.

In Tabelle 4 sind die optischen Eigenschaften des Verbundglases aus der erfindungsgemäßen transparenten Scheibe mit elektrisch leitfähiger Beschichtung aus Beispiel 2, der zweiten Scheibe 12 und der thermoplastischen Zwischenschicht 17 zusammengefasst. T_{L}(A) bezeichnet dabei die Gesamttransmission von Lichtart A, Ra* (D65/8°) und Rb* (D65/8°) die Farbkoordinaten im L*a*b*-Farbraum bei Reflexion von Lichtart D65 und einem Einfallswinkel von 8°, Ta* (D65/8°) und Tb* (D65/8°) die Farbkoordinaten im L*a*b*-Farbraum bei Transmission von Lichtart D65 und einem Einfallswinkel von 8°. Die Gesamttransmission durch die erfindungsgemäße transparente Scheibe betrug nach der Temperaturbehandlung größer 70 %. Die Farbwerte im L*a*b*-Farbraum lagen bei günstigen Werten. Die erfindungsgemäße transparente Scheibe erfüllt die gesetzlichen Anforderungen bezüglich Transmission und neutraler Färbung und kann als Verglasung von Fahrzeugen verwendet werden.

**Tabelle 4**

| | |
|---|---|
| R_{Quadrat} [Ohm/Quadrat] | 0,66 |
| T_{L} (A) [%] | 70,2 |
| Ra* (D65/8°) | 1,9 |
| Rb* (D65/8°) | -12,3 |
| Ta* (D65/8°) | -6,7 |
| Tb* (D65/8°) | 5,6 |

In weiteren Versuchen hat sich gezeigt, dass für die erfindungsgemäße elektrisch leitfähige Beschichtung 2 Flächenwiderstände bis minimal etwa 0,4 Ohm/Quadrat bei einer Transmission durch die transparente Scheibe von größer 70 % erreicht werden können.

Durch die erfindungsgemäßen Schichten optisch hochbrechenden Materials 4 und die erfindungsgemäßen Glättungsschichten 5 wird der Flächenwiderstand R_{Quadrat} der elektrisch leitfähigen Beschichtung 2 deutlich verringert. Dabei weist die erfindungsgemäße transparente Scheibe eine hohe Transmission und eine hohe Farbneutralität auf. Der geringere Flächenwiderstand R_{Quadrat} führt zu einer Verbesserung der spezifischen Heizleistung P, wenn die elektrisch leitfähige Beschichtung 2 als elektrisch beheizbare Beschichtung verwendet wird, bei gleichzeitig guten optischen Eigenschaften der transparenten Scheibe. Dieses Ergebnis war für den Fachmann unerwartet und überraschend.

### Bezugszeichenliste:

- (1): transparentes Substrat
- (2): elektrisch leitfähige Beschichtung
- (3): funktionelle Schicht
- (3.1), (3.2), (3.3): erste, zweite, dritte funktionelle Schicht
- (4): Schicht optisch hochbrechenden Materials
- (4.1), (4.2), (4.3): erste, zweite, dritte Schicht optisch hochbrechenden Materials
- (5): Glättungsschicht
- (5.1), (5.2), (5.3): erste, zweite, dritte Glättungsschicht
- (6): erste Anpassungsschicht
- (6.1), (6.2), (6.3): erste, zweite, dritte erste Anpassungsschicht
- (7): elektrisch leitfähige Schicht
- (7.1), (7.2), (7.3): erste, zweite, dritte elektrisch leitfähige Schicht
- (8): zweite Anpassungsschicht
- (8.1), (8.2), (8.3): erste, zweite, dritte zweite Anpassungsschicht
- (9): Abdeckschicht
- (11): Blockerschicht
- (11.1), (11.2), (11.3): erste, zweite, dritte Blockerschicht
- (12): zweite Scheibe
- (13): Sammelleiter
- (14): Spannungsquelle
- (15): Abdeckdruck
- (16): Zuleitung
- (17): thermoplastische Zwischenschicht

- a: Breite des durch (15) abgedeckten Bereichs
- b: Breite des beschichtungsfreien Bereichs

- A-A': Schnittlinie

## Patentansprüche

1. Transparente Scheibe, umfassend mindestens ein transparentes Substrat (1) und mindestens eine elektrisch leitfähige Beschichtung (2) auf mindestens einer Oberfläche des transparenten Substrats (1), wobei
- die elektrisch leitfähige Beschichtung (2) mindestens zwei übereinander angeordnete funktionelle Schichten (3) aufweist und jede funktionelle Schicht (3) mindestens
∘ eine Schicht optisch hochbrechenden Materials (4)
∘ oberhalb der Schicht optisch hochbrechenden Materials (4) eine Glättungsschicht (5), die zumindest ein nichtkristallines Oxid enthält,
∘ oberhalb der Glättungsschicht (5) eine erste Anpassungsschicht (6),
∘ oberhalb der ersten Anpassungsschicht (6) eine elektrisch leitfähige Schicht (7) und
∘ oberhalb der elektrisch leitfähigen Schicht (7) eine zweite Anpassungsschicht (8) umfasst,
- die Gesamtschichtdicke aller elektrisch leitfähigen Schichten (7) von 40 nm bis 75 nm beträgt und
- die elektrisch leitfähige Beschichtung (2) einen Flächenwiderstand kleiner 1 Ohm/Quadrat aufweist, **dadurch gekennzeichnet, dass** die Schicht optisch hochbrechenden Materials (4) ein Brechungsindex größer oder gleich 2,1 aufweist und zumindest ein Silizium-Metall-Mischnitrid enthält.

2. Transparente Scheibe nach Anspruch 1, wobei die elektrisch leitfähige Beschichtung (2) eine elektrisch beheizbare Beschichtung ist.

3. Transparente Scheibe nach Anspruch 1, wobei die elektrisch leitfähige Beschichtung (2) eine Beschichtung mit reflektierenden Eigenschaften für den Infrarot-Bereich ist.

4. Transparente Scheibe nach einem der Ansprüche 1 bis 3, wobei die elektrisch leitfähige Beschichtung (2) drei übereinander angeordnete funktionelle Schichten (3) aufweist.

5. Transparente Scheibe nach einem der Ansprüche 1 bis 4, wobei die elektrisch leitfähige Beschichtung (2) einen Flächenwiderstand von 0,4 Ohm/Quadrat bis 0,9 Ohm/Quadrat aufweist.

6. Transparente Scheibe nach einem der Ansprüche 1 bis 5, wobei die Gesamtschichtdicke aller elektrisch leitfähigen Schichten (7) von 50 nm bis 60 nm beträgt.

7. Transparente Scheibe nach einem der Ansprüche 1 bis 6, wobei die Schicht optisch hochbrechenden Materials (4) zumindest ein Silizium-Zirkonium-Mischnitrid, wie Aluminium-dotiertes Silizium-Zirkonium-Mischnitrid enthält.

8. Transparente Scheibe nach einem der Ansprüche 1 bis 7, wobei jede zwischen zwei elektrisch leitfähigen Schichten (7) angeordnete Schicht optisch hochbrechenden Materials (4) eine Dicke von 35 nm bis 70 nm, bevorzugt von 45 nm bis 60 nm aufweist.

9. Transparente Scheibe nach einem der Ansprüche 1 bis 8, wobei die Glättungsschicht (5) zumindest ein nichtkristallines Mischoxid, bevorzugt ein Zinn-Zink-Mischoxid, wie Antimon-dotiertes Zinn-Zink-Mischoxid enthält und bevorzugt eine Dicke von 3 nm bis 20 nm, besonders bevorzugt von 4 nm bis 12 nm aufweist.

10. Transparente Scheibe nach einem der Ansprüche 1 bis 9, wobei die elektrisch leitfähige Schicht (7) zumindest Silber oder eine silberhaltige Legierung enthält und bevorzugt eine Schichtdicke von 8 nm bis 25 nm, besonders bevorzugt von 10 nm bis 20 nm aufweist.

11. Transparente Scheibe nach einem der Ansprüche 1 bis 10, wobei die erste Anpassungsschicht (6) und / oder die zweite Anpassungsschicht (8) Zinkoxid ZnO_{1-δ} mit 0 ≤ δ ≤ 0,01, wie Aluminium-dotiertes Zinkoxid enthält und bevorzugt eine Dicke von 3 nm bis 20 nm, besonders bevorzugt von 4 nm bis 12 nm aufweist.

12. Transparente Scheibe nach einem der Ansprüche 1 bis 11, wobei zumindest eine funktionelle Schicht (3), bevorzugt jede funktionelle Schicht (3) zumindest eine Blockerschicht (11) umfasst, die unmittelbar oberhalb und / oder unmittelbar unterhalb der elektrisch leitfähigen Schicht (7) angeordnet ist und die bevorzugt zumindest Niob, Titan, Nickel, Chrom oder Legierungen davon enthält, besonders bevorzugt Nickel-Chrom-Legierungen, und wobei die Blockerschicht (11) eine Dicke von 0,1 nm bis 2 nm, bevorzugt von 0,1 nm bis 0,3 nm aufweist.

13. Transparente Scheibe nach einem der Ansprüche 1 bis 12, wobei oberhalb der obersten funktionellen Schicht (3) eine Abdeckschicht (9) angeordnet und wobei die Abdeckschicht (9) bevorzugt zumindest ein optisch hochbrechendes Material mit einem Brechungsindex größer oder gleich 2,1 enthält, besonders bevorzugt ein Silizium-Metall-Mischnitrid, insbesondere Silizium-Zirkonium-Mischnitrid, wie Aluminium-dotiertes Silizium-Zirkonium-Mischnitrid.

14. Transparente Scheibe nach einem der Ansprüche 1 bis 13, wobei das transparente Substrat (1) über zumindest eine thermoplastische Zwischenschicht (17) mit einer zweiten Scheibe (12) zu einer Verbundscheibe verbunden ist und wobei die Gesamttransmission der Verbundscheibe bevorzugt größer 70 % beträgt.

15. Verfahren zur Herstellung einer transparente Scheiben mit elektrisch leitfähiger Beschichtung (2) nach einem der Ansprüche 1 bis 14, wobei mindestens zwei funktionelle Schichten (3) nacheinander auf ein transparentes Substrat (1) aufgebracht werden und zum Aufbringen jeder funktionellen Schicht (3) nacheinander zumindest
(a) eine Schicht optisch hochbrechenden Materials (4) mit einem Brechungsindex größer oder gleich 2,1,
(b) eine Glättungsschicht (5), die zumindest ein nichtkristallines Oxid enthält,
(c) eine erste Anpassungsschicht (6),
(d) eine elektrisch leitfähige Schicht (7) und
(e) eine zweite Anpassungsschicht (8)
aufgebracht werden.

16. Verwendung der transparenten Scheibe nach einen der Ansprüche 1 bis 14 als Scheibe oder als Bestandteil einer Scheibe, insbesondere als Bestandteil einer Isolierverglasung oder einer Verbundscheibe, in Gebäuden oder in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und / oder Dachscheibe, insbesondere zur Beheizung einer Scheibe und / oder zur Verminderung der Aufheizung eines Innenraums.

## Claims

1. Transparent pane, comprising at least one transparent substrate (1) and at least one electrically conductive coating (2) on at least one surface of the transparent substrate (1), wherein
- the electrically conductive coating (2) has at least two functional layers (3) arranged one above the other and each functional layer (3) comprises at least
∘ one layer of an optically highly refractive material (4),
∘ above the layer of an optically highly refractive material (4), a smoothing layer (5), which contains at least one non-crystalline oxide,
∘ above the smoothing layer (5), a first matching layer (6),
∘ above the first matching layer (6), an electrically conductive layer (7), and
∘ above the electrically conductive layer (7), a second matching layer (8),
- the total layer thickness of all the electrically conductive layers (7) is from 40 nm to 75 nm, and
- the electrically conductive coating (2) has a sheet resistance less than 1 ohm/square,
**characterised in that** the layer of an optically highly refractive material (4) has a refractive index greater than or equal to 2.1 and contains at least one mixed silicon/metal nitride.

2. Transparent pane according to claim 1, wherein the electrically conductive coating (2) is an electrically heatable coating.

3. Transparent pane according to claim 1, wherein the electrically conductive coating (2) is a coating with reflecting properties for the infrared range.

4. Transparent pane according to one of claims 1 through 3, wherein the electrically conductive coating (2) has three functional layers (3) arranged one above the other.

5. Transparent pane according to one of claims 1 through 4, wherein the electrically conductive coating (2) has a sheet resistance from 0.4 ohm/square to 0.9 ohm/square.

6. Transparent pane according to one of claims 1 through 5, wherein the total layer thickness of all the electrically conductive layers (7) is from 50 nm to 60 nm.

7. Transparent pane according to one of claims 1 through 6, wherein the layer of an optically highly refractive material (4) contains at least one mixed silicon/zirconium nitride, such as aluminium-doped mixed silicon/zirconium nitride.

8. Transparent pane according to one of claims 1 through 7, wherein each layer of an optically highly refractive material (4) arranged between two electrically conductive layers (7) has a thickness from 35 nm to 70 nm, preferably from 45 nm to 60 nm.

9. Transparent pane according to one of claims 1 through 8, wherein the smoothing layer (5) contains at least one non-crystalline mixed oxide, preferably a mixed tin/zinc oxide, such as antimony-doped mixed tin/zinc oxide and preferably has a thickness from 3 nm to 20 nm, particularly preferably from 4 nm to 12 nm.

10. Transparent pane according to one of claims 1 through 9, wherein the electrically conductive layer (7) contains at least silver or a silver-containing alloy and preferably has a layer thickness from 8 nm to 25 nm, particularly preferably from 10 nm to 20 nm.

11. Transparent pane according to one of claims 1 through 10, wherein the first matching layer (6) and / or the second matching layer (8) contains zinc oxide ZnO_{1-δ} with 0 ≤ δ ≤ 0.01, such as aluminium-doped zinc oxide and preferably has a thickness from 3 nm to 20 nm, particularly preferably from 4 nm to 12 nm.

12. Transparent pane according to one of claims 1 through 11, wherein at least one functional layer (3), preferably each functional layer (3) includes at least one blocker layer (11), which is arranged immediately above and / or immediately below the electrically conductive layer (7) and which preferably contains at least niobium, titanium, nickel, chromium, or alloys thereof, particularly preferably nickel-chromium alloys, and wherein the blocker layer (11) has a thickness from 0.1 nm to 2 nm, preferably from 0.1 nm to 0.3 nm.

13. Transparent pane according to one of claims 1 through 12, wherein a cover layer (9) is arranged above the uppermost functional layer (3) and wherein the cover layer (9) preferably contains at least one optically highly refractive material with a refractive index greater than or equal to 2.1, particularly preferably a mixed silicon/metal nitride, in particular mixed silicon/zirconium nitride, such as aluminium-doped mixed silicon/zirconium nitride.

14. Transparent pane according to one of claims 1 through 13, wherein the transparent substrate (1) is bonded to a second pane (12) via at least one thermoplastic intermediate layer (17) to form a composite pane and wherein the total transmittance of the composite pane is preferably greater than 70%.

15. Method for producing a transparent pane with an electrically conductive coating (2) according to one of claims 1 through 14, wherein at least two functional layers (3) are applied one after another on a transparent substrate (1) and for applying each functional layer (3) one after another at least
(a) one layer of an optically highly refractive material (4) with a refractive index greater than or equal to 2.1,
(b) a smoothing layer (5), which contains at least one non-crystalline oxide,
(c) a first matching layer (6),
(d) an electrically conductive layer (7), and
(e) a second matching layer (8)
are applied.

16. Use of the transparent pane according to one of claims 1 through 14 as a pane or as a component of a pane, in particular as a component of an insulating glazing unit or a composite pane, in buildings or in means of transportation for travel on land, in the air, or on water, in particular motor vehicles, for example, as a windshield, rear window, side window, and / or roof pane, in particular for heating a window and / or for reducing the heating up of an interior space.

## Revendications

1. - Vitre transparente, comportant au moins un substrat transparent (1) et au moins un revêtement (2) conducteur de l'électricité sur au moins une surface du substrat transparent (1), où
- le revêtement (2) conducteur de l'électricité présente au moins deux couches fonctionnelles (3) disposées l'une au-dessus de l'autre et chaque couche fonctionnelle (3) comporte au moins
∘ une couche d'un matériau (4) à réfraction optique élevée ;
∘ au-dessus de la couche de matériau (4) à réfraction optique élevée, une couche de lissage (5), qui contient au moins un oxyde non cristallin ;
∘ au-dessus de la couche de lissage (5), une première couche d'adaptation (6) ;
∘ au-dessus de la première couche d'adaptation (6), une couche (7) conductrice de l'électricité ; et
∘ au-dessus de la couche (7) conductrice de l'électricité, une deuxième couche d'adaptation (8) ;
- l'épaisseur totale de toutes les couches (7) conductrices de l'électricité est de 40 nm à 75 nm ; et
- le revêtement (2) conducteur de l'électricité présente une résistance surfacique inférieure à 1 Ohm/carré,
**caractérisée par le fait que**
la couche de matériau (4) à réfraction optique élevée présente un indice de réfraction supérieur ou égal à 2,1 et contient au moins un nitrure mixte de silicium et de métal.

2. - Vitre transparente selon la revendication 1, dans laquelle le revêtement (2) conducteur de l'électricité est un revêtement apte à être chauffé électriquement.

3. - Vitre transparente selon la revendication 1, dans laquelle le revêtement (2) conducteur de l'électricité est un revêtement présentant des propriétés réfléchissantes pour la région infrarouge.

4. - Vitre transparente selon l'une des revendications 1 à 3, dans laquelle le revêtement (2) conducteur de l'électricité présente trois couches fonctionnelles (3) disposées l'une au-dessus de l'autre.

5. - Vitre transparente selon l'une des revendications 1 à 4, dans laquelle le revêtement (2) conducteur de l'électricité présente une résistance surfacique de 0,4 Ohm/carré à 0,9 Ohm/carré.

6. - Vitre transparente selon l'une des revendications 1 à 5, dans laquelle l'épaisseur totale de toutes les couches (7) conductrices de l'électricité est de 50 nm à 60 nm.

7. - Vitre transparente selon l'une des revendications 1 à 6, dans laquelle la couche de matériau (4) à réfraction optique élevée contient au moins un nitrure mixte de silicium-zirconium, tel qu'un nitrure mixte de silicium-zirconium dopé à l'aluminium.

8. - Vitre transparente selon l'une des revendications 1 à 7, dans laquelle chaque couche disposée entre deux couches (7) conductrices de l'électricité d'un matériau (4) à réfraction optique élevée présente une épaisseur de 35 nm à 70 nm, de préférence de 45 nm à 60 nm.

9. - Vitre transparente selon l'une des revendications 1 à 8, dans laquelle la couche de lissage (5) contient au moins un oxyde mixte non cristallin, de préférence un oxyde mixte d'étain et de zinc, comme un oxyde mixte d'étain et de zinc dopé à l'antimoine, et de préférence présente une épaisseur de 3 nm à 20 nm, de façon particulièrement préférée de 4 nm à 12 nm.

10. - Vitre transparente selon l'une des revendications 1 à 9, dans laquelle la couche (7) conductrice de l'électricité contient au moins de l'argent ou un alliage à teneur en argent et, de préférence, présente une épaisseur de couche de 8 nm à 25 nm, de façon particulièrement préférée de 10 nm à 20 nm.

11. - Vitre transparente selon l'une des revendications 1 à 10, dans laquelle la première couche de lissage (6) et/ou la deuxième couche de lissage (8) contiennent de l'oxyde de zinc ZnO_{1-δ} avec 0 ≤ δ ≤ 0,01, comme un oxyde de zinc dopé à l'aluminium, et, de préférence, présente une épaisseur de 3 nm à 20 nm, de façon particulièrement préférée de 4 nm à 12 nm.

12. - Vitre transparente selon l'une des revendications 1 à 11, dans laquelle au moins une couche fonctionnelle (3), de préférence chaque couche fonctionnelle (3), comporte au moins une couche de blocage (11), qui est disposée immédiatement au-dessus et/ou immédiatement au-dessous de la couche (7) conductrice de l'électricité et qui contient de préférence au moins du niobium, du titane, du nickel, du chrome ou des alliages de ceux-ci, de façon particulièrement préférée des alliages de nickel et de chrome, et dans laquelle la couche de blocage (11) présente une épaisseur de 0,1 nm à 2 nm, de préférence de 0,1 nm à 0,3 nm.

13. - Vitre transparente selon l'une des revendications 1 à 12, dans laquelle, au-dessus de la couche fonctionnelle (3) du haut, est disposée une couche de recouvrement (9) et dans laquelle la couche de recouvrement (9) contient de préférence au moins un matériau à haute réfraction optique ayant un indice de réfraction supérieur ou égal à 2,1, de façon particulièrement préférée un nitrure mixte de silicium et de métal, en particulier un nitrure mixte de silicium et de zirconium, comme un nitrure mixte de silicium et de zirconium dopé à l'aluminium.

14. - Vitre transparente selon l'une des revendications 1 à 13, dans laquelle le substrat transparent (1) est lié par au moins une couche intermédiaire thermoplastique (17) avec une deuxième vitre (12) pour former une vitre composite et dans laquelle la transmission totale de la vitre composite est de préférence de plus de 70 %.

15. - Procédé de fabrication d'une vitre transparente ayant un revêtement (2) conducteur de l'électricité selon l'une des revendications 1 à 14, dans lequel au moins deux couches fonctionnelles (3) sont disposées l'une après l'autre sur un substrat transparent (1) et pour l'application de chaque couche fonctionnelle (3) sont appliquées l'une après l'autre au moins
(a) une couche de matériau (4) à réfraction optique élevée ayant un indice de réfraction supérieur ou égal à 2,1 ;
(b) une couche de lissage (5), qui contient au moins un oxyde non cristallin ;
(c) une première couche d'adaptation (6) ;
(d) une couche (7) conductrice de l'électricité ; et
(e) une deuxième couche d'adaptation (8).

16. - Utilisation de la vitre transparente selon l'une des revendications 1 à 14 comme vitre ou comme composant d'une vitre, en particulier comme composant d'un vitrage isolant ou d'un vitrage composite, dans des bâtiments ou dans des moyens de locomotion pour la circulation sur terre, dans l'air ou sur l'eau, en particulier dans des véhicules automobiles par exemple comme pare-brise, vitre arrière, vitre latérale et/ou vitre de toit, en particulier pour le chauffage d'une vitre et/ou pour la diminution du chauffage d'un habitacle.
